# EUROPEAN PATENT SPECIFICATION

(11) **EP 4 240 529 B1**
(45) Date of publication and mention of the grant of the patent: **04.09.2024**
(21) Application number: 21815219.7
(22) Date of filing: 29.11.2021
(51) Int. Cl.: B01L 7/00, G05D 23/19, H05B 1/02, G05B 13/02

(54) **DEVICE FOR AMPLIFYING AND DETECTING BIOLOGICAL MATERIAL**
VORRICHTUNG FÜR DIE VERVIELFÄLTIGUNG UND DEN NACHWEIS VON BIOLOGISCHEM MATERIAL
DISPOSITIF D'AMPLIFICATION ET DE DÉTECTION DE MATÉRIAU BIOLOGIQUE

(30) Priority: 03.12.2020 EP 20211632
(43) Date of publication of application: 13.09.2023
(73) Proprietor: Max-Planck-Gesellschaft zur Förderung der Wissenschaften e.V., 80539 München (DE)
(72) Inventor: GOMEZ VARELA, David, 37075 Göttingen (DE); STÜHMER, Walter, 37077 Göttingen (DE)
(74) Representative: Vossius & Partner Patentanwälte Rechtsanwälte mbB
(86) International application number: PCT/EP2021/083339
(87) International publication number: WO 2022/117498

(56) References cited:
- EP-A1- 2 739 747
- WO-A1-2009/032087

## Description

### BACKGROUND OF THE INVENTION

The invention relates to a device to be used in amplifying and detecting biological material. In particular, the present invention relates to a device used for detecting methods, e.g., loop-mediated isothermal amplification, which may reveal the presence of a particular pathogen or molecule in a biological sample. The biological sample may be a human biological sample, but could also be a sample from an animal or plant. The biological material may be genomic material. The device may have low energy requirements.

Loop-mediated isothermal amplification (LAMP) is a technique used to amplify DNA or RNA and a low-cost method to detect certain diseases. Other devices for amplifying genomic material can be based on the polymerase chain reaction (PCR).

The amplification of genomic material, in particular via LAMP and PCR, gained attention also in light of the COVID-19 outbreak. One of the significant challenges in an epidemic is quickly understanding how an infectious disease spreads through a population. Without comprehensive data, appropriate measures to counter the spread are delayed or cannot be implemented effectively. By enabling early diagnosis and generally lowering the barrier to test for diseases, many types of diseases can be treated at an early stage or prevented from further transmission, which can make a lifesaving difference.

For this reason, diagnostic devices that can deliver reliable and fast results are desired. It is also desirable for such diagnostic devices to be suitable for use at a point of care or even autonomously by the patient (e.g., in a private household).

It is desired for such devices to be easily operable and/or automated so that the labour required for the diagnostic procedure is reduced, increasing the overall testing capacity. It is particularly convenient for patients themselves if the devices operate largely independently.

Furthermore, reducing the complexity of the procedure for the user and the cost of a testing device are important factors for broader accessibility. It is desirable that the testing can be conducted not only in a laboratory, but also remotely. In particular, it is believed that a portable and/or relatively small (e.g., hand-held) device would allow for wide distribution and use.

Portable devices for amplifying and detecting biological material are known. For example, Phillips et al., "Microfluidic rapid and autonomous analytical device (microrad) to detect HIV from blood samples", Lab on Chip, 2019:20 (DOI: 10.1039/C9LC00506D) discloses a portable device for reverse-transcription loop-mediated isothermal amplification. Other portable devices for the amplification and detection of biological material are known from WO 2009/032087 A1 and EP 2739747 A1.

It is believed that further improvements to power management and/or sample heating in such devices would be desirable.

### SUMMARY OF THE INVENTION

It is an objective of the present invention to provide an improved device for amplifying and detecting biological material. More specifically, it is an objective of the present invention to provide a device for amplifying and detecting biological material with enhanced power management and/or sample heating.

According to a first aspect of the present invention, a device for amplifying and detecting biological material in a biological sample comprises a heating arrangement for heating the sample. The heating arrangement comprises a first heating element, a second heating element, a first controller for the first heating element, and a second controller for the second heating element. The device further comprises an interface to a power source, the power source providing an available source voltage and an available source power to the device. The device is configured to determine power values for the heating elements by a method comprising the following steps:
a) A step of setting a second heating element power as determined by a predetermined pulse width of current pulses for the second heating element.
b) A step of ramping up a first heating element power as determined by a pulse width of current pulses for the first heating element by incrementally increasing the pulse width for the first heating element.
c) After ramping up the first heating element power, a step of checking the available source voltage, a step of checking whether the available source power decreases, and a step of checking whether a predetermined maximum first heating element power value is reached. Preferably, all three conditions are checked. However, checking two of these conditions may be sufficient in some cases.
d) Iterating the step of ramping up the first heating element power if the available source voltage is above a first predetermined minimum voltage, the available source power has not decreased, and the first heating element power is below the predetermined maximum first heating element power value.
e) Storing a value of the first heating element power. Preferably, said value is stored when at least one of the following conditions is fulfilled: the available source voltage drops below the first predetermined minimum voltage, or the available source power decreases, or the first heating element power reaches the predetermined maximum first heating element power value. Preferably, said value is a present value of the first heating element power. Preferably, said value of the first heating element power is set as a first heating element power value for heating a biological sample, as explained in more detail below.

The steps may be performed in the order stated above.

Setting the second heating element power with the predetermined pulse width and ramping up the first heating element power allows the device to determine the optimal level of power to be used from a limited power source, which may subsequently be used to supply the heating elements. In this manner, it can be assessed how much power is available and can be used by the first heating element safely and efficiently without leading to a malfunction of the device.

Preferably, the predetermined maximum first heating element power value is at least 2.0 Watt.

Preferably, the second heating element power is set to at least 0.1 Watt, preferably at least 1.0 Watt. Such power values are believed to allow for efficient heating of the relevant biological samples.

The device may include a voltage doubler.

The first predetermined minimum voltage may be set to a value sufficient for operating a microcontroller of the device. For example, the first predetermined minimum voltage may be set to at least 3.1 Volt, preferably at least 3.8 Volt, more preferably at least 4.0 Volt. In this manner, a microcontroller operating at, for example 3.3 Volt may be employed (e.g., if the first predetermined minimum voltage is at least 3.3 Volt, or preferably 3.8 Volt to provide adequate reserve). A microcontroller operating at 5 Volt may be employed, for example if a voltage doubler is incorporated into the device (e.g., if the first predetermined minimum voltage is at least 3.1 Volt and doubled, thus providing adequate reserve), or if the first predetermined minimum voltage is at least 5 Volt.

The method may include a further step of checking the available source voltage before the step of ramping up the first heating element power. The device may be configured to abort the method for determining power values when the available source voltage is below a second predetermined minimum voltage, preferably when the available source voltage is below 4.0 Volt, preferably below 3.8 Volt, more preferably below 3.1 Volt. This may avoid performing the further method steps when it is already foreseeable that the available source power will not be sufficient.

According to a second aspect of the present invention, a device for amplifying and detecting biological material in a biological sample comprises a heating arrangement for heating the sample. The heating arrangement comprises a first heating element, a second heating element, a first controller for the first heating element, and a second controller for the second heating element. The device further comprises an interface to a power source, the power source providing an available source voltage and an available source power to the device. The device is configured to heat up the sample by a method comprising following steps:
a) Heating up the first heating element based on a set first heating element power value as determined by a pulse width of current pulses for the first heating element.
b) Heating up the second heating element based on a second heating element power as determined by a pulse width of current pulses for the second heating element.
c) A step of calculating or retrieving
   (i) a temperature inflection point for the first heating element, and/or
   (ii) a pulse width reduction rate to be applied upon reaching a first predetermined temperature.
d) A step of checking a present temperature in the heating arrangement.
e) A step of incrementally decreasing the pulse width of current pulses for the first heating element upon
   (i) the present temperature reaching the temperature inflection point, and/or
   (ii) the present temperature reaching the first predetermined temperature.
f) Iterating the steps of checking the present temperature and incrementally decreasing the pulse width of the first heating element until the present temperature in the heating arrangement reaches a second predetermined temperature.
g) Controlling the second heating element power by the second controller to maintain a predetermined target temperature of the biological sample. Preferably, the second controller is a proportional integral differential (PID) controller.

Steps e) to g) may be performed in the stated order. Step d) may be performed before step e).

Steps a) to c) may be performed before steps d) to g).

It is desired for the biological sample to be heated up rapidly but also accurately and reliably. Controlling the temperature with two heating elements that fulfill different functions, as described above, is believed to be helpful in this respect. The temperature inflection point for the first heating element and/or the pulse width reduction rate may be calculated, or alternatively retrieved, e.g., from a memory. Initially, both heating elements may heat up using respective set power values until the temperature inflection point and/or the first predetermined temperature is reached. Then, the power supplied to the first heating element is incrementally decreased to a lower level. Without wanting to be bound by theory, it is believed that this may allow to reach the target temperature in a relatively fast and stable manner with minimal overshooting.

Preferably, the method comprises, for example, after step f), a step of decreasing the pulse width of current pulses for the first heating element to a predetermined first heating element power value. This may be done upon reaching a predetermined power threshold and/or upon reaching the second predetermined temperature. This may avoid the controllers from interfering with each other. For example, the first heating element may be turned off. Alternatively, the pulse width of current pulses for the first heating element may be decreased so that the first heating element delivers 5% to 80% of the power necessary to maintain the predetermined target temperature of the biological sample.

The predetermined first heating element power value may be less than 80%, preferably less than 50%, of the set first heating element power value.

The predetermined first heating element power value may be less than 100%, preferably less than 80%, of the set second heating element power value.

Once the target temperature is reached, fine-tuning or maintaining the temperature may be achieved by the second heating element controlled by the PID controller.

According to a third aspect of the present invention, the first and second aspects may be combined. In particular, a device for amplifying and detecting biological material according to the second aspect described above may be configured to determine the set first heating element power value in accordance with the method described for the first aspect above. In other words, such device may first perform the method described for the first aspect, determine thereby the set first heating element power value and then, subsequently, perform the method described for the second aspect. This provides for an automatic determination of the available power and efficient use of said available power for heating up the sample in a fast and accurate manner, with minimal intervention by the user being required.

In accordance with all of the above-mentioned aspects, the device may be configured to receive a container containing the biological sample and associated reagents in the heating arrangement. Associated reagents may be, for example, primers for a LAMP or PCR reaction. The device may be configured to heat the sample to the predetermined target temperature when received in the heating arrangement.

The device may be configured so that the pulse width of current pulses for the second heating element has an initial duty cycle of at least 50%, more preferably at least 80% or even 100%. For a rapid heating process, the maximum available power may be used to supply the second heating element.

The method may further comprise a step of maintaining the pulse width of current pulses for the second heating element at a duty cycle of at least 50%, more preferably at least 80% or even 100% (e.g., at the initial duty cycle) until reaching the first predetermined temperature. For example, the pulse width of current pulses for the second heating element may be maintained at such duty cycle after the step of checking the present temperature in the heating arrangement. Maintaining such duty cycle would provide the maximum amount of power for the second heating element.

Preferably, the first predetermined temperature is 1 °C to 10 °C below, preferably 1 °C to 5 °C below, the predetermined target temperature. By having the first predetermined temperature below the predetermined target temperature, overshooting of the temperature may be minimised or prevented.

As noted above, the pulse width of current pulses for the first heating element may be decreased to a predetermined first heating element power value upon reaching the second predetermined temperature. The second predetermined temperature may be within a range of from 0 °C to 10 °C below the target temperature, preferably within a range of from 2 °C to 4 °C, below the target temperature. Alternatively or additionally, the predetermined power threshold may be relied upon. In this case, the predetermined power threshold may be at least 2 Watt, preferably 4 Watt.

The predetermined target temperature of the biological sample may be within a range from 55 °C to 80 °C, preferably within a range of from 60 °C to 75 °C. The device may be configured to reach and maintain temperatures within these ranges. Most processes for amplifying and detecting biological material are preferably carried out in these temperature ranges. However, it should be noted that also other appropriate temperature ranges may be reached using the same methods.

For amplifying and detecting biological material, it is preferred for the device to be configured to equalise the temperature of the biological sample for 30 min to 60 min in a range of 55 °C to 80 °C, preferably 60 °C to 75 °C, more preferably at about 64 °C.

As indicated above, the device may comprise a microcontroller and/or a memory. A virtual or programmable controller, e.g. a PID controller, may be provided by the microcontroller and/or saved in the memory in order to fulfil the above-mentioned functionalities. Therefore, a hardwired controller is not necessarily required.

The device may be configured to perform one or more measurements of the sample. Preferably, several measurements are performed at different time points. In LAMP or PCR, changes in fluorescence, turbidity of and/or light transmission through the sample and/or container may be indicative of whether a certain pathogen or molecule is present in the sample. The device may be configured to display the result of the analysis and/or an error after analysing one or more measurements.

Measurement may be taken at predetermined time intervals, e.g. once every minute. This may lower the necessary computing capacity, without noticeably compromising performance of the device.

Furthermore, the device may be configured to perform one or more measurements of a background behind the sample and/or the container. The results of these measurements may be stored. Background measurements may be used for correction of sample measurement results, if desired.

Measurement results may be stored, for example, as volatile variables, e.g. in the memory of the microcontroller. A plurality of measurement results taken over the time of a measurement may be stored in a volatile array.

For example, the device may indicate the presence (positive result) of a certain pathogen (e.g., a certain virus) or molecule (e.g., protein) when fluorescent values rise in a certain manner (e..g., Boltzmann function) within a certain time after the sample has been heated to the target temperature. The pathogen (e.g., viral) load may be determined by the time-point when the increase in fluorescence starts. To obtain this value reliably, a numerical approximation based on the Navier-Stokes equation to find the interception of the tangent to the Boltzmann function with the time axis may be employed. This is equivalent of adjusting a tangent to the inflection point of the Boltzmann function. The numerical approach may be as follows:
(i) Determine the steepest tangent to the Boltzmann curve, and determine where this tangent intersects the time axis.
(ii) From this time point, the viral load concentration can be estimated assessing the time point at which the differential increase in temperature starts to decrease.

While this method for assessing the viral load is advantageous in the context of the second and third aspects because it allows for a simple and efficient determination of the viral load, it is noted that this method for assessing the viral load may also form an independent aspect of the present disclosure. In particular, this method for assessing the viral load may also be employed in conjunction with other heating arrangements than those described above and independently of the methods for controlling the first and second heating elements that have been described for the first to third aspect.

The power source of the device according to any of the above-mentioned aspects may be a mobile device, a computer, a solar panel, or a battery. Preferably, the power source supplies the source voltage and source power via bus connector (e.g., a universal serial bus connector, a Lightning connector, a Thunderbolt connector, a DisplayPort or the like). This may allow for a flexible use of the device and connection to a variety of power sources.

The device according to any of the above-mentioned aspects may further comprise a display (e.g., a matrix-LCD or OLED display) to display one or more results of the analysis (e.g., a positive or negative result and/or a viral load) or to indicate an error. Alternatively or additionally, the results or the error may be displayed on a smartphone, preferably in a dedicated app, preferably wherein the results or error are communicated to the smartphone by wireless transmission. Providing a user-friendly interface can support a less experienced person to operate the device without difficulty.

The invention does also encompass corresponding methods for assessing available power at a power source (in particular, at a power source to which connection is made by a bus connector, a USB connector, a Lightning connector, a Thunderbolt connector, a DisplayPort or the like), regardless of the particular type of device. Moreover, it will be appreciated that these methods may also be used with other devices than devices for amplifying and detecting biological material, in particular with other devices connected to a USB power source or the like.

### BRIEF DESCRIPTION OF THE DRAWINGS

The invention will be described in more detail with reference to the figures below. These figures disclose embodiments of the invention for illustrational purposes only. In particular, the disclosure provided by the figures is not meant to limit the scope of protection conferred by the invention.
Fig. 1 is a schematic block diagram showing a ramping up process in accordance with an embodiment of the present invention.
Fig. 2 is a schematic block diagram showing a heating up process in accordance with a further embodiment of the present invention.
Fig. 3 is a schematic diagram showing a power of a first heating element and a second heating element during the heating up process.
Fig. 4 is a schematic diagram showing a temperature curve of a heating arrangement during the heating up process.
Fig. 5 is a schematic diagram showing exemplary components of devices in accordance with embodiments of the present invention.

### DETAILED DESCRIPTION

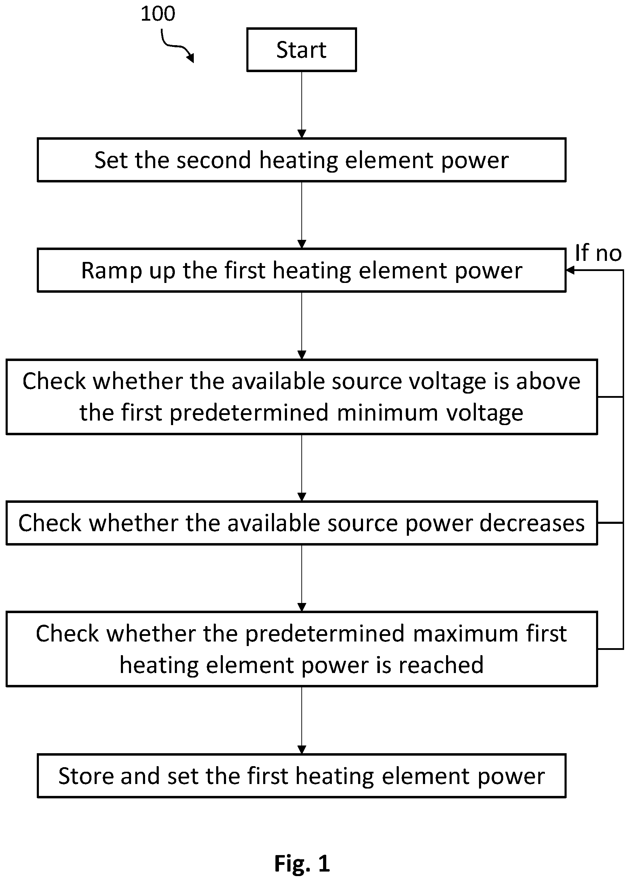

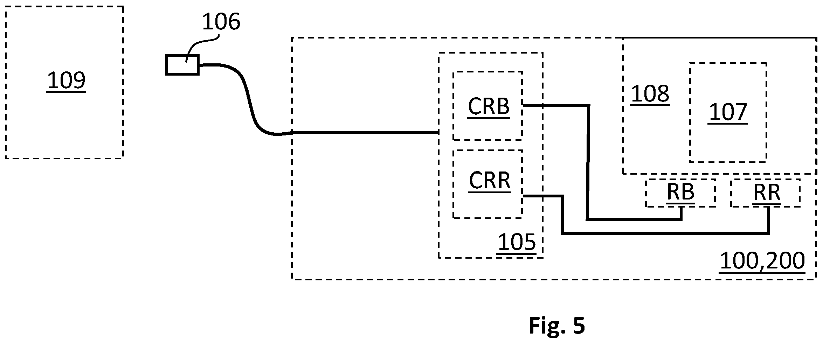

Figs. 1 and 5 schematically illustrate a device (100) according to the first aspect of the present invention. The device (100) for amplifying and detecting biological material in a biological sample comprises a heating arrangement for heating the sample. The heating arrangement comprises a first heating element (RB), a second heating element (RR), a first controller (CRB) for the first heating element (RB), and a second controller (CRR) for the second heating element (RR). The device further comprises an interface (106) to a power source (109), the power source (109) providing an available source voltage and an available source power to the device (100). The interface (106) may be a bus cable, such as a USB cable or a Lightning cable. The device (100) further comprises a compartment (108) configured to receive the sample, e.g. within a sample container (107).

The first controller (CRB) and the second controller (CRR) may be provided by a single microcontroller (105). Alternatively, separate controllers, e.g. separate microcontrollers, may be used.

The device is configured to determine power values for the heating elements (RB, RR) by a method comprising the steps shown in Fig. 1.

The method begins with a step of setting a second heating element power as determined by a predetermined pulse width of current pulses for the second heating element (RR).

Subsequently, a step of ramping up a first heating element power as determined by a pulse width of current pulses for the first heating element (RB) by incrementally increasing the pulse width for the first heating element (RB) is performed.

This is followed by a step of checking the available source voltage after the step of ramping up the first heating element power, a step of checking whether the available source power decreases, and a step of checking whether a predetermined maximum first heating element power value is reached. The step of ramping up the first heating element power is iterated if the available source voltage is above a first predetermined minimum voltage, and the available source power has not decreased, and the first heating element power is below the predetermined maximum first heating element power value.

Subsequently, a present first heating element power value is stored and set as a set first heating element power value when at least one of the following conditions is fulfilled: the available source voltage is below the first predetermined minimum voltage, or the available source power decreases, or the first heating element power reaches the predetermined maximum first heating element power value.

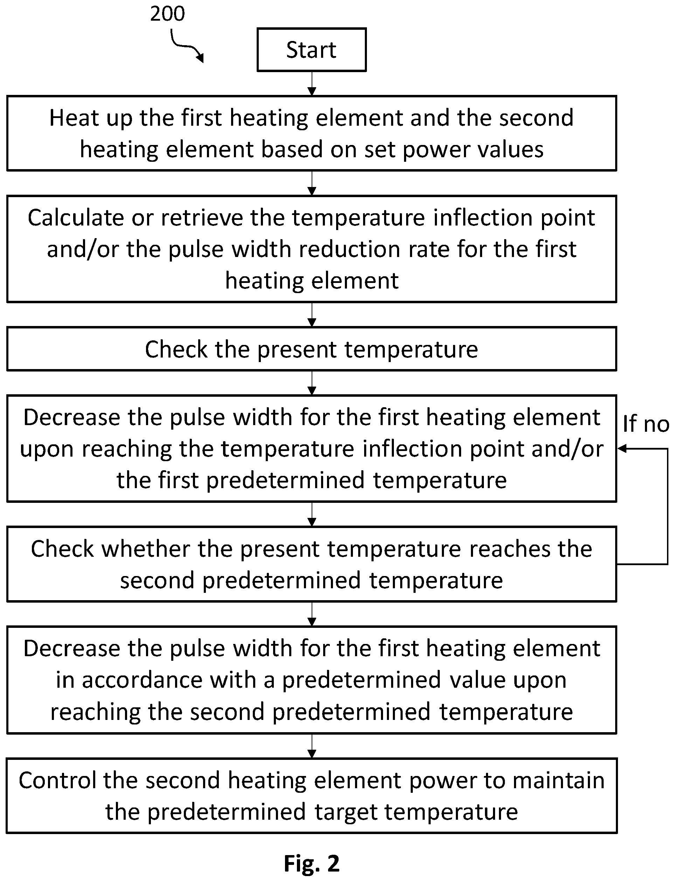

Figs. 2 and 5 schematically illustrate a device (200) for amplifying and detecting biological material in a biological sample according to a second aspect of the present invention. As with the device (100) addressed with reference to Fig. 1, the device (200) comprises a heating arrangement for heating the sample. The heating arrangement comprises a first heating element (RB), a second heating element (RR), a first controller (CRB) for the first heating element (RB), a second controller (CRR) for the second heating element (RR). The device further comprises an interface (106) to a power source (109), the power source providing an available source voltage and an available source power to the device. The interface (106) may be a bus cable, such as a USB cable or a Lightning cable. The device (200) further comprises a compartment (108) configured to receive the sample, e.g. within a sample container (107).

The device (200) is configured to heat up the sample by a method comprising the steps shown in Fig. 2.

The method begins with a step of heating up the first heating element (RB) based on a set first heating element power value as determined by a pulse width of current pulses for the first heating element (RB), and heating up the second heating element (RR) based on a second heating element power as determined by a pulse width of current pulses for the second heating element (RR).

Subsequently, a step of calculating and/or assessing a temperature inflection point for the first heating element (RB) is performed. Alternatively or additionally, a pulse width reduction rate to be applied upon reaching a first predetermined temperature is calculated and/or assessed. Alternatively, the temperature inflection point for the first heating element and/or the pulse width reduction rate may be retrieved, e.g., from a memory. This is followed by a step of checking a present temperature in the heating arrangement and a step of incrementally decreasing the pulse width of current pulses for the first heating element (RB) upon the present temperature reaching the temperature inflection point and/or upon reaching the first predetermined temperature. The steps of checking the present temperature and incrementally decreasing the pulse width of the first heating element (RB) are then iterated until the present temperature in the heating arrangement reaches a second predetermined temperature.

Subsequently, the pulse width of current pulses for the first heating element (RB) is decreased in accordance with and/or to a predetermined value upon reaching a predetermined power threshold and/or the second predetermined temperature. The second heating element power is then controlled by the second controller, wherein the second controller is a PID controller, to maintain a predetermined target temperature of the biological sample.

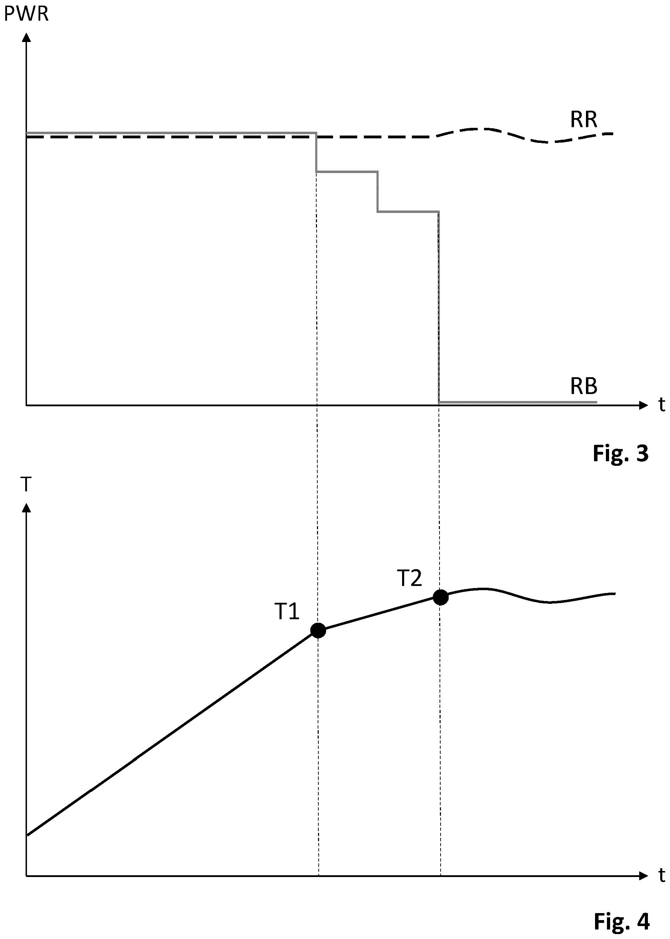

Fig. 3 schematically illustrates the power curves (PWR on Y-axis) of a first heating element (RB) and a second heating element (RR) over the course of time (t on X-axis). As described for the second aspect, the first and second heating elements may be supplied with set power values, which do not necessarily have to be at similar levels as illustrated. Upon reaching a temperature inflection point and/or a first predetermined temperature (see T1 in Fig. 4), which may be calculated or retrieved by the device, the first heating element power is decreased incrementally. Then, upon reaching a second predetermined temperature (T2) and/or a predetermined power threshold, the first heating element power decreases to a, preferably constant, lower level. The second heating element (RR) and its PID controller are then used to maintain the temperature of the sample within the desired range.

Fig. 4 schematically illustrates the temperature curve (T on Y-axis) of a heating arrangement over the course of time (t on X-axis). As described for the second aspect, a first heating element (RB) and a second heating element (RR) are heated up rapidly based on the set power values, until a temperature inflection point and/or a first predetermined temperature (T 1) is reached. After this, the gradient of the curve gets lower due to the incremental decrease of the first heating element power until reaching the second predetermined temperature and/or a predetermined power threshold. Finally, a predetermined target temperature is maintained using the second heating element (RR) and its PID controller.

## Claims

1. A device (100) for amplifying and detecting biological material in a biological sample, comprising a heating arrangement for heating the sample, the heating arrangement comprising a first heating element (RB), a second heating element (RR), a first controller (CRB) for the first heating element (RB), a second controller (CRR) for the second heating element (RR), an interface (106) to a power source (109), the power source (109) providing an available source voltage and an available source power to the device (100), wherein the device (100) is configured to determine power values for the heating elements (RB, RR) by a method comprising:
- a step of setting a second heating element power as determined by a predetermined pulse width of current pulses for the second heating element (RR);
- a step of ramping up a first heating element power as determined by a pulse width of current pulses for the first heating element (RB) by incrementally increasing the pulse width for the first heating element (RB);
- a step of checking the available source voltage after the step of ramping up the first heating element power;
- a step of checking whether the available source power decreases;
- a step of checking whether a predetermined maximum first heating element power value is reached;
- iterating the step of ramping up the first heating element power if the available source voltage is above a first predetermined minimum voltage, and the available source power has not decreased, and the first heating element power is below the predetermined maximum first heating element power value; and
- a step of storing and setting a present first heating element power as a set first heating element power value when at least one of the following conditions is fulfilled:
the available source voltage is below the first predetermined minimum voltage, or
the available source power decreases, or the first heating element power reaches the predetermined maximum first heating element power value.

2. The device according to claim 1, wherein the predetermined maximum first heating element power value is at least 2.0 Watt.

3. The device according to claim 1 or 2, wherein the second heating element power is set to at least 0.1 Watt, preferably at least 1.0 Watt.

4. The device according to any one of claims 1-3, wherein the first predetermined minimum voltage is set to at least 3.1 Volt, preferably 3.8 Volt, more preferably 4.0 Volt.

5. The device according to any one of claims 1-4, the method including a further step of checking the available source voltage before the step of ramping up the first heating element power, wherein the device is configured to abort the method for determining power values when the available source voltage is below a second predetermined minimum voltage, preferably when the available source voltage is below 4.0 Volt, preferably below 3.8 Volt, more preferably below 3.1 Volt.

6. A device (200) for amplifying and detecting biological material in a biological sample, comprising a heating arrangement for heating the sample, the heating arrangement comprising a first heating element (RB), a second heating element (RR), a first controller (CRB) for the first heating element (RB), a second controller (CRR) for the second heating element (RR), an interface (106) to a power source (109), the power source (109) providing an available source voltage and an available source power to the device (200), wherein the device (200) is configured to heat up the sample by a method comprising:
- a step of heating up the first heating element (RB) based on a set first heating element power value as determined by a pulse width of current pulses for the first heating element (RB) and the second heating element (RR) based on a second heating element power as determined by a pulse width of current pulses for the second heating element (RR);
- a step of calculating or retrieving a temperature inflection point for the first heating element (RB) and/or calculating or retrieving a pulse width reduction rate to be applied upon reaching a first predetermined temperature;
- a step of checking a present temperature in the heating arrangement;
- a step of incrementally decreasing the pulse width of current pulses for the first heating element (RB) upon the present temperature reaching the temperature inflection point and/or upon reaching the first predetermined temperature;
- iterating the steps of checking the present temperature and incrementally decreasing the pulse width of the first heating element (RB) until the present temperature in the heating arrangement reaches a second predetermined temperature;
- a step of decreasing the pulse width of current pulses for the first heating element (RB) in accordance with a predetermined value upon reaching a predetermined power threshold and/or the second predetermined temperature; and
- controlling the second heating element power by the second controller (CRR), wherein the second controller is a PID controller, to maintain a predetermined target temperature of the biological sample.

7. The device according to any one of claims 1-5, wherein the device is further configured to heat up the sample by a method comprising:
- a step of heating up the first heating element (RB) based on the set first heating element power value as determined by the pulse width of current pulses for the first heating element (RB) and the second heating element (RR) based on the second heating element power as determined by the pulse width of current pulses for the second heating element (RR);
- a step of calculating or retrieving a temperature inflection point for the first heating element (RB) and/or calculating or retrieving a pulse width reduction rate to be applied upon reaching a first predetermined temperature;
- a step of checking a present temperature in the heating arrangement;
- a step of incrementally decreasing the pulse width of current pulses for the first heating element (RB) upon the present temperature reaching the temperature inflection point and/or upon reaching the first predetermined temperature;
- iterating the steps of checking the present temperature and incrementally decreasing the pulse width of the first heating element (RB) until the present temperature in the heating arrangement reaches a second predetermined temperature;
- a step of decreasing the pulse width of current pulses for the first heating element (RB) in accordance with a predetermined value upon reaching a predetermined power threshold and/or the second predetermined temperature; and
- controlling the second heating element power by the second controller, wherein the second controller is a PID controller, to maintain a predetermined target temperature.

8. The device according any one of claims 6 or 7, wherein the device is further configured to:
reach and maintain the predetermined target temperature in the heating arrangement;
receive a container (107) of the biological sample and associated reagents into the heating arrangement;
equalise the temperature in the container (107) to the predetermined target temperature in the heating arrangement;
measure a background and store the respective measurement value;
perform a plurality of measurements on the sample over time and store the respective measurement values;
analyse the measurement values; and
display a result of the analysis.

9. The device according to any one of claims 6-8, wherein the method further comprises, after the step of checking the present temperature in the heating arrangement:
maintaining the pulse width of current pulses for the second heating element (RR) at the initial duty cycle of 100% until reaching the first predetermined temperature.

10. A device according to any one of claims 6-9, wherein the pulse width of current pulses for the first heating element (RB) is decreased so that the first heating element (RB) delivers 5% to 80% of the power necessary to maintain the predetermined target temperature of the biological sample.

11. The device according to any one of claims 6-10, wherein the first predetermined temperature is 1 °C to 10 °C below, preferably 1 °C to 5 °C below, the predetermined target temperature.

12. The device according to any one of claim 6-11, wherein the second predetermined temperature is within the range of from 0 °C to 10 °C below the target temperature, preferably within the range of from 2 °C to 4 °C, below the target temperature.

13. The device according to any one of claims 6-12, wherein the predetermined power threshold is at least 2 Watt, preferably at 4 Watt.

14. The device according to any one of claims 6-13, wherein the temperature of the biological sample is equalised between 30 min to 60 min at a range of 60 °C to 70 °C, preferably at 64 °C.

15. The device according to any one of claims 1-14, wherein the power source (109) is a mobile device, a computer, solar panel, or a battery, and/or wherein the power source supplies the source voltage and source power via a bus connector, in particular via a universal serial bus connector.

## Patentansprüche

1. Vorrichtung (100) zum Amplifizieren und Nachweisen von biologischem Material in einer biologischen Probe, die eine Heizanordnung zum Erwärmen der Probe aufweist, wobei die Heizanordnung ein erstes Heizelement (RB), ein zweites Heizelement (RR), eine erste Steuerung (CRB) für das erste Heizelement (RB), eine zweite Steuerung (CRR) für das zweite Heizelement (RR), eine Schnittstelle (106) zu einer Stromquelle (109) aufweist, wobei die Stromquelle (109) eine verfügbare Quellenspannung und eine verfügbare Quellenleistung für die Vorrichtung (100) bereitstellt, wobei die Vorrichtung (100) konfiguriert ist, Leistungswerte für die Heizelemente (RB, RR) durch ein Verfahren zu bestimmen, das aufweist:
- einen Schritt des Einstellens einer Leistung des zweiten Heizelements, wie sie durch eine vorbestimmte Impulsbreite von Stromimpulsen für das zweite Heizelement (RR) bestimmt wird;
- einen Schritt des Steigerns einer Leistung des ersten Heizelements, wie sie durch eine Impulsbreite von Stromimpulsen für das erste Heizelement (RB) bestimmt wird, durch schrittweises Erhöhen der Impulsbreite für das erste Heizelement (RB);
- einen Schritt des Prüfens der verfügbaren Quellenspannung nach dem Schritt des Steigerns der Leistung des ersten Heizelements;
- einen Schritt des Prüfens, ob die verfügbare Quellenleistung abnimmt;
- einen Schritt des Prüfens, ob ein vorbestimmter maximaler Wert der Leistung des ersten Heizelements erreicht ist;
- Iterieren des Schritts des Steigerns der Leistung des ersten Heizelements, wenn die verfügbare Quellenspannung über einer ersten vorbestimmten minimalen Spannung liegt und die verfügbare Quellenleistung nicht abgenommen hat und die Leistung des ersten Heizelements unter dem vorbestimmten maximalen Wert der Leistung des ersten Heizelements liegt; und
- einen Schritt des Speicherns und Einstellens einer gegenwärtigen Leistung des ersten Heizelements als einen eingestellten Wert der Leistung des ersten Heizelements, wenn mindestens eine der folgenden Bedingungen erfüllt ist:
die verfügbare Quellenspannung liegt unter der ersten vorbestimmten minimalen Spannung, oder die verfügbare Quellenleistung nimmt ab, oder die Leistung des ersten Heizelements erreicht den vorbestimmten maximalen Wert der Leistung des ersten Heizelements.

2. Vorrichtung nach Anspruch 1, wobei der vorbestimmte maximale Wert der Leistung des ersten Heizelements mindestens 2,0 Watt beträgt.

3. Vorrichtung nach Anspruch 1 oder 2, wobei die Leistung des zweiten Heizelements auf mindestens 0,1 Watt, vorzugsweise auf mindestens 1,0 Watt, eingestellt ist.

4. Vorrichtung nach einem der Ansprüche 1 bis 3, wobei die erste vorbestimmte minimale Spannung auf mindestens 3,1 Volt, vorzugsweise 3,8 Volt, besonders bevorzugt 4,0 Volt, eingestellt ist.

5. Vorrichtung nach einem der Ansprüche 1 bis 4, wobei das Verfahren einen weiteren Schritt des Prüfens der verfügbaren Quellenspannung vor dem Schritt des Steigerns der Leistung des ersten Heizelements aufweist, wobei die Vorrichtung konfiguriert ist, das Verfahren zur Bestimmung von Leistungswerten abbricht, wenn die verfügbare Quellenspannung unter einer zweiten vorbestimmten minimalen Spannung liegt, vorzugsweise wenn die verfügbare Quellenspannung unter 4,0 Volt, vorzugsweise unter 3,8 Volt, besonders bevorzugt unter 3,1 Volt liegt.

6. Vorrichtung (200) zum Amplifizieren und Detektieren von biologischem Material in einer biologischen Probe, die eine Heizanordnung zum Erwärmen der Probe aufweist, wobei die Heizanordnung ein erstes Heizelement (RB), ein zweites Heizelement (RR), eine erste Steuerung (CRB) für das erste Heizelement (RB) eine zweite Steuerung (CRR) für das zweite Heizelement (RR), eine Schnittstelle (106) zu einer Stromquelle (109) aufweist, wobei die Stromquelle (109) eine verfügbare Quellenspannung und eine verfügbare Quellenleistung für die Vorrichtung (200) bereitstellt, wobei die Vorrichtung (200) konfiguriert ist, die Probe durch ein Verfahren zu erwärmen, das aufweist:
- einen Schritt des Erwärmens des ersten Heizelements (RB) basierend auf einem eingestellten Wert der Leistung des ersten Heizelements, wie er durch eine Impulsbreite von Stromimpulsen für das erste Heizelement (RB) bestimmt wird, und des zweiten Heizelements (RR) basierend auf einer Leistung des zweiten Heizelements, wie er durch eine Impulsbreite von Stromimpulsen für das zweite Heizelement (RR) bestimmt wird;
- einen Schritt des Berechnens oder Abrufens eines Temperatur-Wendepunkts für das erste Heizelement (RB) und/oder des Berechnens oder Abrufens einer Pulsbreiten-Reduzierungsrate, die beim Erreichen einer ersten vorbestimmten Temperatur angewendet werden soll;
- einen Schritt des Prüfens einer gegenwärtigen Temperatur in der Heizanordnung;
- einen Schritt des schrittweisen Verringerns der Impulsbreite von Stromimpulsen für das erste Heizelement (RB), wenn die gegenwärtige Temperatur den Temperatur-Wendepunkt erreicht und/oder wenn die erste vorbestimmte Temperatur erreicht wird;
- Iterieren der Schritte des Prüfens der gegenwärtigen Temperatur und des schrittweisen Verringerns der Impulsbreite des ersten Heizelements (RB), bis die gegenwärtige Temperatur in der Heizanordnung eine zweite vorbestimmte Temperatur erreicht;
- einen Schritt des Verringerns der Impulsbreite von Stromimpulsen für das erste Heizelement (RB) gemäß einem vorbestimmten Wert beim Erreichen einer vorbestimmten Leistungsschwelle und/oder der zweiten vorbestimmten Temperatur; und
- Steuern der Leistung des zweiten Heizelements durch die zweite Steuerung (CRR), wobei die zweite Steuerung ein PID-Regler ist, um eine vorbestimmte Solltemperatur der biologischen Probe aufrechtzuerhalten.

7. Vorrichtung nach einem der Ansprüche 1 bis 5, wobei die Vorrichtung ferner konfiguriert ist, die Probe durch ein Verfahren zu erwärmen, das aufweist:
- einen Schritt des Erwärmens des ersten Heizelements (RB) basierend auf dem eingestellten Wert der Leistung des ersten Heizelements, wie er durch die Impulsbreite der Stromimpulse für das erste Heizelement (RB) bestimmt wird, und des zweiten Heizelements (RR) basierend auf der Leistung des zweiten Heizelements, wie sie durch die Impulsbreite der Stromimpulse für das zweite Heizelement (RR) bestimmt wird;
- einen Schritt des Berechnens oder Abrufens eines Temperatur-Wendepunkts für das erste Heizelement (RB) und/oder des Berechnens oder Abrufens einer Pulsbreiten-Reduzierungsrate, die beim Erreichen einer ersten vorbestimmten Temperatur angewendet werden soll;
- einen Schritt des Prüfens einer gegenwärtigen Temperatur in der Heizanordnung;
- einen Schritt des schrittweisen Verringerns der Impulsbreite von Stromimpulsen für das erste Heizelement (RB), wenn die gegenwärtige Temperatur den Temperatur-Wendepunkt erreicht und/oder wenn die erste vorbestimmte Temperatur erreicht wird;
- Iterieren der Schritte des Prüfens der gegenwärtigen Temperatur und des schrittweisen Verringerns der Impulsbreite des ersten Heizelements (RB), bis die gegenwärtige Temperatur in der Heizanordnung eine zweite vorbestimmte Temperatur erreicht;
- einen Schritt des Verringerns der Impulsbreite von Stromimpulsen für das erste Heizelement (RB) gemäß einem vorbestimmten Wert bei Erreichen einer vorbestimmten Leistungsschwelle und/oder der zweiten vorbestimmten Temperatur; und
- Steuern der Leistung des zweiten Heizelements durch die zweite Steuerung, wobei die zweite Steuerung ein PID-Regler ist, um eine vorbestimmte Solltemperatur aufrechtzuerhalten.

8. Die Vorrichtung nach einem der Ansprüche 6 oder 7, wobei die Vorrichtung ferner konfiguriert ist, um:
die vorbestimmte Solltemperatur in der Heizanordnung zu erreichen und aufrechtzuerhalten;
einen Behälter (107) mit der biologischen Probe und zugehörigen Reagenzien in der Heizanordnung aufzunehmen;
die Temperatur im Behälter (107) an die vorbestimmte Solltemperatur in der Heizanordnung anzugleichen;
einen Hintergrund zu messen und den jeweiligen Messwert zu speichern;
mehrere Messungen an der Probe im Zeitablauf durchzuführen und die jeweiligen Messwerte zu speichern;
die Messwerte zu analysieren; und
ein Ergebnis der Analyse anzuzeigen.

9. Vorrichtung nach einem der Ansprüche 6 bis 8, wobei das Verfahren ferner nach dem Schritt des Prüfens der gegenwärtigen Temperatur in der Heizanordnung aufweist:
Beibehalten der Impulsbreite der Stromimpulse für das zweite Heizelement (RR) beim anfänglichen Tastverhältnis von 100 % bis zum Erreichen der ersten vorgegebenen Temperatur.

10. Vorrichtung nach einem der Ansprüche 6 bis 9, wobei die Impulsbreite der Stromimpulse für das erste Heizelement (RB) so verringert wird, dass das erste Heizelement (RB) 5 % bis 80 % der Leistung abgibt, die erforderlich ist, um die vorbestimmte Solltemperatur der biologischen Probe aufrechtzuerhalten.

11. Vorrichtung nach einem der Ansprüche 6 bis 10, wobei die erste vorbestimmte Temperatur 1°C bis 10°C, vorzugsweise 1°C bis 5°C, unter der vorbestimmten Solltemperatur liegt.

12. Vorrichtung nach einem der Ansprüche 6-11, wobei die zweite vorbestimmte Temperatur im Bereich von 0°C bis 10°C unter der Solltemperatur, vorzugsweise im Bereich von 2°C bis 4°C, unter der Solltemperatur liegt.

13. Vorrichtung nach einem der Ansprüche 6 bis 12, wobei die vorbestimmte Leistungsschwelle mindestens 2 Watt, vorzugsweise 4 Watt, beträgt.

14. Vorrichtung nach einem der Ansprüche 6 bis 13, wobei die Temperatur der biologischen Probe zwischen 30 min und 60 min an einem Bereich von 60°C bis 70°C, vorzugsweise an 64°C, angeglichen wird.

15. Vorrichtung nach einem der Ansprüche 1 bis 14, wobei die Stromquelle (109) ein mobiles Gerät, ein Computer, ein Solarpanel oder eine Batterie ist und/oder wobei die Stromquelle die Quellenspannung und die Quellenleistung über einen Busanschluss, insbesondere über einen USB-Anschluss, liefert.

## Revendications

1. Dispositif (100) pour l'amplification et la détection de matériel biologique dans un échantillon biologique, comprenant un dispositif de chauffage pour chauffer l'échantillon, ledit dispositif de chauffage comprenant un premier élément chauffant (RB), un deuxième élément chauffant (RR), un premier contrôleur (CRB) pour le premier élément chauffant (RB), un deuxième contrôleur (CRR) pour le deuxième élément chauffant (RR), une interface (106) vers une source d'alimentation (109), ladite source d'alimentation (109) fournissant une tension source disponible et une puissance source disponible au dispositif (100), ledit dispositif (100) étant prévu pour déterminer des valeurs de puissance pour les éléments chauffants (RB, RR) au moyen d'un procédé comprenant :
- une étape de réglage d'une puissance du deuxième élément chauffant déterminée par une largeur d'impulsion prédéterminée d'impulsions de courant pour le deuxième élément chauffant (RR) ;
- une étape d'élévation de la puissance du premier élément chauffant déterminée par une largeur d'impulsion d'impulsions de courant pour le premier élément chauffant (RB), en augmentant progressivement la largeur d'impulsion pour le premier élément chauffant (RB) ;
- une étape de vérification de la tension de source disponible après l'étape d'élévation de la puissance du premier élément chauffant ;
- une étape de vérification si la puissance de la source disponible diminue ;
- une étape de vérification si une valeur maximale prédéterminée de la puissance du premier élément chauffant est atteinte ;
- la répétition de l'étape d'élévation de la puissance du premier élément chauffant si la tension de source disponible est supérieure à une première tension minimale prédéterminée, et si la puissance de source disponible n'a pas diminué et si la puissance du premier élément chauffant est inférieure à la valeur maximale prédéterminée de la puissance du premier élément chauffant ; et
- une étape d'accumulation et de réglage d'une puissance actuelle du premier élément chauffant en tant que valeur de réglage de la puissance du premier élément chauffant si au moins l'une des conditions suivantes est remplie :
la tension de la source disponible est inférieure à la première tension minimale prédéterminée, ou la puissance de la source disponible diminue, ou la puissance du premier élément chauffant atteint la valeur maximale prédéterminée de la puissance du premier élément chauffant.

2. Dispositif selon la revendication 1, où la valeur de puissance maximale prédéterminée du premier élément chauffant est d'au moins 2,0 Watt.

3. Dispositif selon la revendication 1 ou la revendication 2, où la puissance du deuxième élément chauffant est réglée à au moins 0,1 Watt, de préférence à au moins 1,0 Watt.

4. Dispositif selon l'une des revendications 1 à 3, où la première tension minimale prédéterminée est fixée à au moins 3,1 volts, avantageusement à 3,8 volts, préférentiellement à 4,0 volts.

5. Dispositif selon l'une des revendications 1 à 4, le procédé comprenant une étape supplémentaire de vérification de la tension source disponible avant l'étape d'élévation de puissance du premier élément chauffant, ledit dispositif étant prévu pour négliger le procédé de détermination des valeurs de puissance si la tension source disponible est inférieure à une deuxième tension minimale prédéterminée, avantageusement si la tension source disponible est inférieure à 4,0 volts, préférentiellement inférieure à 3,8 volts, tout particulièrement inférieure à 3,1 volts.

6. Dispositif (200) pour l'amplification et la détection de matériel biologique dans un échantillon biologique, comprenant un dispositif de chauffage pour chauffer l'échantillon, ledit dispositif de chauffage comprenant un premier élément chauffant (RB), un deuxième élément chauffant (RR), un premier contrôleur (CRB) pour le premier élément chauffant (RB), un deuxième contrôleur (CRR) pour le deuxième élément chauffant (RR), une interface (106) vers une source d'alimentation (109), ladite source d'alimentation (109) fournissant une tension source disponible et une puissance source disponible au dispositif (200), ledit dispositif (200) étant prévu pour chauffer l'échantillon au moyen d'un procédé comprenant :
- une étape de chauffage du premier élément chauffant (RB) sur la base d'une valeur de puissance de premier élément chauffant déterminée par une largeur d'impulsion des impulsions de courant pour le premier élément chauffant (RB), et du deuxième élément chauffant (RR) sur la base d'une puissance de deuxième élément chauffant déterminée par une largeur d'impulsion des impulsions de courant pour le deuxième élément chauffant (RR) ;
- une étape de calcul ou d'extraction d'un point d'inflexion de la température pour le premier élément chauffant (RB) et/ou de calcul ou d'extraction d'un taux de réduction de la largeur d'impulsion applicable si une première température prédéterminée est atteinte ;
- une étape de vérification d'une température actuelle dans le dispositif de chauffage ;
- une étape de diminution progressive de la largeur d'impulsion des impulsions de courant pour le premier élément chauffant (RB) si la température actuelle atteint le point d'inflexion de la température et/ou si la première température prédéterminée est atteinte ;
- la répétition des étapes de vérification de la température actuelle et de diminution progressive de la largeur d'impulsion du premier élément chauffant (RB) jusqu'à ce que la température actuelle dans le dispositif de chauffage atteigne une deuxième température prédéterminée ;
- une étape de diminution de la largeur d'impulsion des impulsions de courant pour le premier élément chauffant (RB) en fonction d'une valeur prédéterminée si un seuil de puissance prédéterminé et/ou la deuxième température prédéterminée sont atteints ; et
- la commande de la puissance du deuxième élément chauffant par le deuxième contrôleur (CRR), ledit deuxième contrôleur étant un contrôleur PID, afin de maintenir une température de consigne prédéterminée de l'échantillon biologique.

7. Dispositif selon l'une des revendications 1 à 5, ledit dispositif étant en outre prévu pour chauffer l'échantillon au moyen d'un procédé comprenant :
- une étape de chauffage du premier élément chauffant (RB) sur la base d'une valeur de puissance du premier élément chauffant déterminée par une largeur d'impulsion des impulsions de courant pour le premier élément chauffant (RB), et du deuxième élément chauffant (RR) sur la base d'une puissance de deuxième élément chauffant déterminée par une largeur d'impulsion des impulsions de courant pour le deuxième élément chauffant (RR) ;
- une étape de calcul ou d'extraction d'un point d'inflexion de la température pour le premier élément chauffant (RB) et/ou de calcul ou d'extraction d'un taux de réduction de la largeur d'impulsion applicable si une première température prédéterminée est atteinte ;
- une étape de vérification d'une température actuelle dans le dispositif de chauffage ;
- une étape de diminution progressive de la largeur d'impulsion des impulsions de courant pour le premier élément chauffant (RB) si la température actuelle atteint le point d'inflexion de la température et/ou si la première température prédéterminée est atteinte ;
- la répétition des étapes de vérification de la température actuelle et de diminution progressive de la largeur d'impulsion du premier élément chauffant (RB) jusqu'à ce que la température actuelle dans le dispositif de chauffage atteigne une deuxième température prédéterminée ;
- une étape de diminution de la largeur d'impulsion des impulsions de courant pour le premier élément chauffant (RB) en fonction d'une valeur prédéterminée si un seuil de puissance prédéterminé et/ou la deuxième température prédéterminée sont atteints ; et
- la commande de la puissance du deuxième élément chauffant par le deuxième contrôleur, ledit deuxième contrôleur étant un contrôleur PID, afin de maintenir une température de consigne prédéterminée.

8. Dispositif selon la revendication 6 ou la revendication 7, ledit dispositif en outre prévu pour :
atteindre et maintenir la température de consigne prédéterminée dans le dispositif de chauffage ;
recevoir un récipient (107) contenant l'échantillon biologique et les réactifs associés dans le dispositif de chauffage ;
rendre la température du récipient (107) égale à la température de consigne prédéterminée dans le dispositif de chauffage ;
mesurer un arrière-plan et mémoriser la valeur de mesure correspondante ;
effectuer plusieurs mesures sur l'échantillon dans le temps et mémoriser les valeurs de mesure correspondantes ;
analyser les valeurs de mesure ; et
afficher le résultat de l'analyse.

9. Dispositif selon l'une des revendications 6 à 8, où le procédé comprend en outre, après l'étape de vérification de la température actuelle dans le dispositif de chauffage :
le maintien de la largeur d'impulsion des impulsions de courant pour le deuxième élément chauffant (RR) au rapport cyclique initial de 100 %, jusqu'à ce que la première température prédéterminée soit atteinte.

10. Dispositif selon l'une des revendications 6 à 9, où la largeur d'impulsion des impulsions de courant pour le premier élément chauffant (RB) est diminuée de sorte que le premier élément chauffant (RB) délivre 5 % à 80 % de la puissance nécessaire pour maintenir la température de consigne prédéterminée de l'échantillon biologique.

11. Dispositif selon l'une des revendications 6 à 10, où la première température prédéterminée est inférieure de 1 °C à 10 °C, de préférence de 1 °C à 5 °C, à la température de consigne prédéterminée.

12. Dispositif selon l'une des revendications 6 à 11, où la deuxième température prédéterminée est comprise dans la plage de 0 °C à 10 °C en dessous de la température de consigne, de préférence dans la plage de 2 °C à 4 °C en dessous de la température de consigne.

13. Dispositif selon l'une des revendications 6 à 12, où le seuil de puissance prédéterminé est d'au moins 2 watts, de préférence de 4 watts.

14. Dispositif selon l'une des revendications 6 à 13, où la température de l'échantillon biologique est égalisée entre 30 min et 60 min à une plage de 60 °C à 70 °C, de préférence à 64 °C.

15. Dispositif selon l'une des revendications 1 à 14, où la source d'énergie (109) est un appareil mobile, un ordinateur, un panneau solaire ou une batterie, et/ou où la source d'énergie fournit la tension source et la puissance source via un connecteur de bus, en particulier via un connecteur de bus série universel.
